Europäisches Patentamt

(19) European Patent Office

Office européen des brevets

(11) Publication number: **0 093 554**
**B1**

(12) # EUROPEAN PATENT SPECIFICATION

(45) Date of publication of patent specification: **14.01.87**  (51) Int. Cl.⁴: **G 21 F 9/16**

(21) Application number: **83302294.0**

(22) Date of filing: **22.04.83**

(54) **Method of encapsulating solids.**

(30) Priority: **30.04.82 US 373597**

(43) Date of publication of application:
**09.11.83 Bulletin 83/45**

(45) Publication of the grant of the patent:
**14.01.87 Bulletin 87/03**

(84) Designated Contracting States:
**CH DE FR GB LI SE**

(56) References cited:
**FR-A-2 242 752**
**GB-A-2 025 685**
**US-A-3 249 551**

(73) Proprietor: **WESTINGHOUSE ELECTRIC CORPORATION**
**Westinghouse Building Gateway Center**
**Pittsburgh Pennsylvania 15235 (US)**

(72) Inventor: **Yoldas, Bulent Erturk**
**1605 Jamestown Place**
**Pittsburgh Pennsylvania (US)**
Inventor: **Grekila, Richard Briggs**
**1016 Findley Drive East**
**Pittsburgh Pennsylvania (US)**

(74) Representative: **van Berlyn, Ronald Gilbert**
**23, Centre Heights**
**London, NW3 6JG (GB)**

Courier Press, Leamington Spa, England.

## Description

This invention relates to a method of encapsulating solids.

A formidable impediment to the widespread use of nuclear power is concern over the safe disposal of nuclear waste products. While a great many proposals have been advanced for sealing these products in various glasses and other types of materials, many of these processes are expensive and do not utilize materials of great long-term stability and resistance to leaching by subsurface water.

A particularly desirable material for the storage of radioactive waste is α-alumina. This material is extremely stable and resistant to chemical attack and physical erosion. The difficulty in using it, however, is that it melts at a very high temperature and other materials have a low solubility in it. Radioactive materials cannot be easily processed at high temperatures because some of them can volatilize and may escape into the atmosphere unless great care is exercised.

U.S. Patent Specification No. 3,941,719 discloses the preparation of non-particulate transition alumina having a porosity of about 63%.

An article by Bulent E. Yoldas entitled, "A Transparent Porous Alumina", in The American Ceramic Society Bulletin, Vol. 54, No. 3, March, 1975, describes a non-particulate transition alumina having a porosity of about 63%.

U.S. Patent Specification No. 4,012,337 discloses a process of forming α-alumina compositions from hydrated β-alumina. The α-alumina is used as a support for catalyst compositions.

U.S. Patent Specification No. 4,156,658 discloses a method for fixing radioactive ions in a porous media by injecting into the porous media a water-soluble organic monomer which is polymerizable to a gel structure with an ion exchange site. The monomer is polymerized to form ion exchange gels.

FR—A—2242752 discloses a method for fixing a radioactive solution in an active alumina.

The invention consists in a method of encapsulating solids in α-alumina characterized by forming a solution or colloid of said solids in a liquid which has a surface tension low enough to wet gravel sized pieces of a porous delta-alumina having at least 40% porosity; permitting said solution or colloid to enter the pores of said gravel sized pieces of said delta-alumina; evaporating said liquid; and heating said delta-alumina to its alpha-alumina transformation temperature to seal said pores thereby entrapping said solids thereon after said heating, washing the surface of said gravel sized pieces to remove radioactive wastes not trapped in said pores.

We have discovered that radioactive waste and other solids which are dissolved in a liquid or formed into a colloid, can be sealed in an α-alumina matrix. The method makes use of a special $Al_2O_3$ which has a large open porosity and which non-destructively converts to $Al_2O_3$ at 1200°C by elimination of its entire porosity. The waste products are impregnated in the pores of this $Al_2O_3$ initially, then the material is converted to α-$Al_2O_3$, trapping and encapsulating the waste. Unlike prior processes for encapsulating ratioactive waste material, this invention is a low temperature process requiring no thermal reaction of $Al_2O_3$ with the waste material to form a stable crystalline or glassy phase with $Al_2O_3$, nor does it require solubility of the waste material in alumina. It is also a simple and inexpensive process. The invention utilizes aluminum oxide, one of the best materials for containing radioactive waste, yet is able to seal the waste at a much lower temperature than the melting point of the aluminum oxide.

The non-particulate transition alumina used has a delta structure. The alumina has a porosity of at least 40%, and preferably the porosity exceeds 60%. Preparation of the high porosity alumina is described in U.S. Patent Specification No. 3,941,719. Additional descriptions of the alumina can be found in an article by Bulent E. Yoldas entitled "A Transparent Porous Alumina", which appeared in The American Ceramic Soc. Bulletin Vol. 54, No. 3, March, 1975 pp. 286—289 and "Alumina Gels at Form Porous Transport $Al_2O_3$", in The American Ceramic Society Bulletin, Vol. 54, No. 3, March, 1975, pp. 289—290, and an article by Bulent E. Yoldas entitled "Alumina Sol Preparation from Alkoxides", which appeared in the Journal of Materials Science, Vol. 10, 1975, pp. 1856—1860. In that alumina, all the porosity is open and consist of channels around 100A in diameter. Another unusual property of this $Al_2O_3$ is that it goes under crystalline transformations at 1200°C, during which the open structure non-destructively collapses to a dense and virtually pore free α-$Al_2O_3$. The alumina is prepared as gravel-sized pieces because the absorption into the alumina of the solution containing the dissolved or colloidal solids is faster when smaller pieces are used.

A solution or colloid is prepared of the solid material one wishes to entrap in the alumina. The solids may be radioactive waste materials, poisons, corrosive substances, or other types of solids. If a colloid is prepared, the colloidal solids must be smaller than the pore sizes of the alumina. The solids in the solution or colloid should thermally decompose to unsoluble stable components, such as to oxides, upon heating and should have a low vapor pressure below 1200°C so that they are not vaporized when the pores are sealed.

The liquid used to form the solution or colloid must have a surface tension which is low enough to wet the alumina so that the liquid flows into the pores of the alumina. The liquid must also be capable of either dissolving the solid material or else of forming a colloid with it. It is preferable that the liquid be inexpensive and non-toxic to hold down material and processing costs. A liquid with a low heat of vaporization is also desirable to reduce the amount of energy needed to evaporate it. Suitable liquids include water, alcohols, and various organic solvents. Water is a desirable liquid because it is inexpensive and many solids are soluble in it. Alcohols to $C_4$ are desirable because of their fluidity and wetting characteristics.

The solution may be prepared at almost any concentration even though saturated solutions are desirable, melts of 100% waste products should be avoided as some shrinkage of the alumina is needed to seal its pores. This is usually not a problem, however, as most solutions become saturated at concentrations considerably below 100% and many solids decompose to give off gases at temperatures below the alumina transformation temperature, which reduces the volume of solids remaining. It is preferable to soak the alumina in the solution or colloid under vacuum in order to remove entrapped air from the alumina. It is also very helpful to heat the solution as this reduces the surface tension of the solution and produces a more rapid and complete penetration of the solution into the pores of the alumina.

Once the pores of the alumina have been filled with the solution or colloid, the carrier liquid or solvent is evaporated by drying leaving the waste material deposited in the $Al_2O_3$ pores. The alumina is then further heated to its transformation temperature, which is from 1200 to 1250°C, which converts the alumina to $\alpha$-alumina with collapsing of the entire porosity. This shrinks the alumina and seals its pores, trapping the solid material inside the closed pores. Because the surface nucleation takes place throughout the matrix, the shrinkage does not result in the cracking of the alumina. The conversion to $\alpha$-alumina is readily observed because the alumina goes from a translucent or transparent state to an opaque, white china color, and up to 20% shrinkage may occur.

After the alumina has cooled, one washes the surface to remove any solids which have not been trapped in the pores. These solids can then be added to the solution or colloid used in the next batch.

The invention will now be illustrated with reference to the following Example:

Example

10 gram, one-piece samples of 64% porous $\delta$-alumina prepared according to U.S. Patent Specification No. 3,941,719 were soaked overnight in aqueous saturated solutions of various salts. The samples were then removed from these solutions, surface dried with a tissue, and heated to 130°C until dry. The samples were weighed, then heated to 1200°C for a few minutes until they changed from the translucent or transparent $\delta$-alumina to the opaque $\alpha$-alumina. The samples were then cooled, washed, dried, and weighed a second time. The following table gives the salts which were used and the percent weight gain of the alumina before and after conversion to $\alpha$-alumina.

| | | | Weight gain | |
|---|---|---|---|---|
| Sample | Impregnating salt | | After impregnation and drying at 130°C | After conversion to $\alpha$-alumina |
| 1 | $NaNO_3$ | | 26.8 | 6.6 |
| 2 | NaOH | | 12.5 | 3.3 |
| 3 | NaCl | | 22.6 | 7.1 |
| 4 | $Zn\ (C_2H_3O_3)_2$ | | 14.8 | 4.3 |
| 5 | $CuSO_4$ | | 23.9 | 4.9 |
| 6 | $KH_2PO_4$ | | 41.0 | 34.0 |

The solution containing the potassium dihydrogen phosphate had been heated to about 50°C during impregnation which indicates that larger amounts of solids may be contained in the alumina if the solutions are heated.

**Claims**

1. A method of encapsulating solids in $\alpha$-alumina characterized by forming a solution or colloid of said solids in a liquid which has a surface tension low enough to wet gravel sized pieces of a porous delta-alumina having at least 40% porosity; permitting said solution or colloid to enter the pores of said gravel sized pieces of said delta-alumina; evaporating said liquid; and heating said delta-alumina to its alpha-alumina transformation temperature to seal said pores thereby entrapping said solids thereon after said heating, washing the surface of said gravel sized pieces to remove radioactive wastes not trapped in said pores.

2. A method according to claim 1, characterized in that the transformation temperature is from 1200 to 1250°C.

3. A method according to claim 1 or 2 characterized in that a solution is formed.

4. A method according to any of claims 1, 2 or 3, characterized in that the liquid is water.

5. A method according to any of claims 1, 2 or 3, characterized in that the liquid is an alcohol to $C_4$.

6. A method according to any of claims 1 to 5, characterized in that the solution is heated below its boiling point to increase the speed and extent of its penetration into said pores.

## Patentansprüche

1. Ein Verfahren zur Einkapselung von Feststoffen in Alpha-Alumina, gekennzeichnet durch Bilden einer Lösung oder eines Kolloids der Feststoffe in einer Flüssigkeit, die eine Oberflächenspannung aufweist, welche niedrig genug ist, um Stücke von Schottergröße eines porösen Delta-Aluminas zu benetzen, welches eine Porösität von zumindest 40 % aufweist; Ermöglichen der Lösung oder dem Kolloid, in die Poren der Stücke von Schottergröße des Delta-Aluminas einzudringen; Verdampfen der Flüssigkeit; und Erhitzen des Delta-Aluminas auf seine Alpha-Alumina-Transformationstemperatur, um die Poren abzudichten und dadurch die Feststoffe nach dem Erhitzen daran einzuschließen, Waschen der Oberfläche der Stücke von Schottergröße, um in den Poren nicht eingeschlossene radioaktive Abfallstoffe zu entfernen.

2. Ein Verfahren nach Anspruch 1, dadurch gekennzeichnet, daß die Transformationstemperatur zwischen 1200° bis 1250°C liegt.

3. Ein Verfahren nach Anspruch 1 oder 2, dadurch gekennzeichnet, daß eine Lösung gebildet wird.

4. Ein Verfahren gemäß einem der Ansprüche 1, 2 oder 3, dadurch gekennzeichnet, daß die Flüssigkeit Wasser ist.

5. Ein Verfahren nach einem der Ansprüche 1, 2 oder 3, dadurch gekennzeichnet, daß die Flüssigkeit ein Alkohol bis $C_4$ ist.

6. Ein Verfahren nach einem der Ansprüche 1 bis 5, dadurch gekennzeichnet, daß die Lösung unterhalb ihres Siedepunktes erhitzt wird, um die Geschwindigkeit und das Ausmaß ihres Eindringens in die Poren zu erhöhen.

## Revendications

1. Procédé pour encapsuler des solides dans de l'aumine-α caractérisé en ce qu'on forme une solution ou un colloïde de ces solides, dans un liquide qui présente une tension superficielle suffisamment basse pour mouiller des pièces ayant la dimension de graviers d'une alumine-δ dont la porosité est d'au moins 40 %, on laisse cette solution ou ce colloïde pénétrer dans les pores des pièces ayant la dimension de graviers de cette alumine-delta, on fait évaporer le liquide, et, on chauffe l'alumine-δ à sa température de transformation en alumine-α de façon à sceller les pores, y enfermant ainsi les solides après le chauffage, et en lavant la surface des pièces ayant la dimension de graviers pour en enlever les déchets radioactifs qui n'ont pas été piégés dans les pores.

2. Procédé suivant la revendication 1, caractérisé en ce que la température de transformation est de 1200 à 1250°C.

3. Procédé suivant l'une des revendications 1 ou 2, caractérisé en ce qu'il est formé une solution.

4. Procédé suivant l'une des revendications 1, 2 ou 3, caractérisé en ce que le liquide est de l'eau.

5. Procédé suivant l'une quelconque des revendications 1, 2 ou 3, caractérisé en ce que le liquide est un alcool en $C_4$.

6. Procédé suivant l'une quelconque des revendications 1 à 5, caractérisé en ce que la solution est chauffée en dessous de son point d'ébullition pour augmenter la vitesse et l'étendue de sa pénètration dans les pores.

4